# EUROPÄISCHE PATENTSCHRIFT

(11) **EP 1 243 810 B1**
(45) Veröffentlichungstag und Bekanntmachung des Hinweises auf die Patenterteilung: **04.06.2003**
(21) Anmeldenummer: 01107043.0
(22) Anmeldetag: 21.03.2001
(51) Int. Cl.: F16F 15/32, B65D 85/672

(54) **Austauschbarer Transportbehälter mit Bleigewichtsstrang für das Auswuchten von Fahrzeugrädern**
Replaceable transport container with a band of balancing weights for a vehicle wheel
Conteneur de transport interchangeable pour une bande de masses d'équilibrage pour roue de véhicule

(43) Veröffentlichungstag der Anmeldung: 25.09.2002
(73) Patentinhaber: Bettchen, Uwe, 42579 Heiligenhaus (DE); Bettchen, David, 42579 Heiligenhaus (DE)
(72) Erfinder: Bettchen, Uwe, 42579 Heiligenhaus (DE); Bettchen, David, 42579 Heiligenhaus (DE)
(74) Vertreter: Kern, Wolfgang, Dipl.-Ing.

(56) Entgegenhaltungen:
- DE-A- 2 522 149
- US-A- 2 608 295
- US-A- 3 960 409
- US-A- 5 591 909

## Beschreibung

Die Erfindung betrifft einen austauschbaren Transportbehälter mit Bleigewichtsstrang für das Auswuchten von Fahrzeugrädern gemäß dem Oberbegriff des Anspruchs 1.

Bleigewichtsstränge dieser Art sind beispielsweise aus der DE-OS 25 22 149 bekannt. Der bekannte Strang wird von einer Vorratsrolle in eine in Abhängigkeit vom Unwuchtgrad eines auszuwuchtenden Rades gesteuerten Vorschubeinrichtung und danach in eine Trennvorrichtung geliefert zum Zwecke des Abtrennens des den mittels der Vorschubeinrichtung von der Vorratsrolle abgezogenen Strangabschnittes. Eine derartige Vorratsrolle oder Spule muß nach ihrer Leerung zur Wiederbestückung verpackt und abtransportiert werden und wird in dieser Zeit durch eine volle bzw. neu bestückte Vorratsrolle ersetzt, die zu diesem Zweck aus ihrem Transportbehälter entnommen wird, um in die Vorschub- bzw. Trennvorrichtung eingesetzt zu werden.

Da das Verpacken der leeren Vorratsrollen und das Auspacken der vollen Rollen dieser Art, die ein erhebliches Gewicht aufweisen, zeit- und kostenaufwendig ist, hat sich die Erfindung zur Aufgabe gemacht, einen Bleigewichtsstrang zu entwickeln, der zwar nach wie vor von Vorratsrollen abgerollt wird, um in Wuchtgewichte gewünschter Länge zerschnitten zu werden, die dann in die Kraftfahrzeugräder oder -felgen eingebaut werden, um diese auszuwuchten, bei dem sich jedoch das Verpacken und Auspacken der Vorratsrollen erübrigt und bei dem außerdem ein vergleichsweise größerer Vorrat an Bleigewichtsstrangmasse zur Verfügung steht.

Diese Aufgabe wird mit den Merkmalen des Hennzeichnenden Teils von Anspruch 1 gelöst.

Grundgedanke der Erfindung ist somit, den Bleigewichtsstrang auf Vorratsrollen in speziell ausgebildeten Transportbehältern anzuliefern und den Strang danach aus einem solchen Transportbehälter zu entnehmen, ohne daß die Vorratsrolle oder -spule ausgepackt bzw. aus dem Transportbehälter entnommen werden muß. Dadurch wird eine erhebliche Zeit- und Kosteneinsparung erreicht, die insbesondere darauf zurückzuführen ist, daß der Transportbehälter, der zweckmäßigerweise ein flacher Kubus ist und hinsichtlich Form und Abmessungen an Größe und Form der beiden übereinanderliegenden Spulen angepaßt ist, ständig benutzt wird, und zwar auch dann, wenn die Vorratsspule oder -spulen nicht angeliefert oder abtransportiert werden, sondern wenn sie dem Ablängmechanismus für das Bleigewichtsband zugeordnet sind, also betriebstechnisch mit diesem Mechanismus eine Einheit bilden.

Dabei hat sich als besonders vorteilhaft erwiesen, nach Entleerung der einen Spule im Transportbehälter diesen von der Spulenachse abzunehmen und um seine Hochachse um ca. 180° zu drehen und dadurch die volle andere, zur ersten Vorratsspule gegenläufig gewickelte Vorratsspule zur Lieferung des Bleigewichtes heranzuziehen.

Der Transportbehälter selbst, der als Versand- und Betriebsmittel dient, ist flach ausgebildet und weist zweckmäßigerweise eine Schmalseite auf, die mit einer Öffnung für den Austritt des Bleigewichtsstrangs der einen oder anderen Vorratsspule versehen ist sowie mit einer Öffnung in seinem Boden für den Durchtritt der die Vorratsspulen aufnehmenden Achse, die im Ständer des Ablängmechanismus angebracht ist.

Vorteilhafte Ausgestaltungen der Erfindung sind den Unteransprüchen zu entnehmen.

Die Erfindung wird nachfolgend an Hand des in der Zeichnung dargestellten Ausführungsbeispiels näher erläutert.

In der Zeichnung zeigt
- Fig. 1: eine schematische, perspektivische Ansicht des in einer Ablängvorrichtung stehenden Transportbehälters für zwei übereinander angeordnete Vorratsspulen für den Bleigewichtsstrang, und
Fig. 2 eine schematische, perspektivische Ansicht des Transportbehälters in Form eines flachen Kastens oder Kartons.

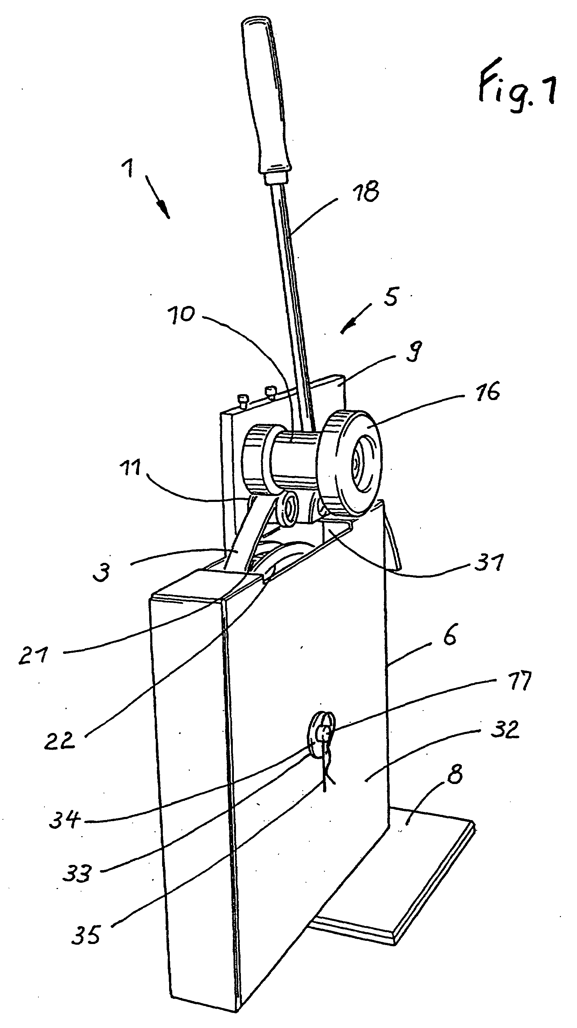

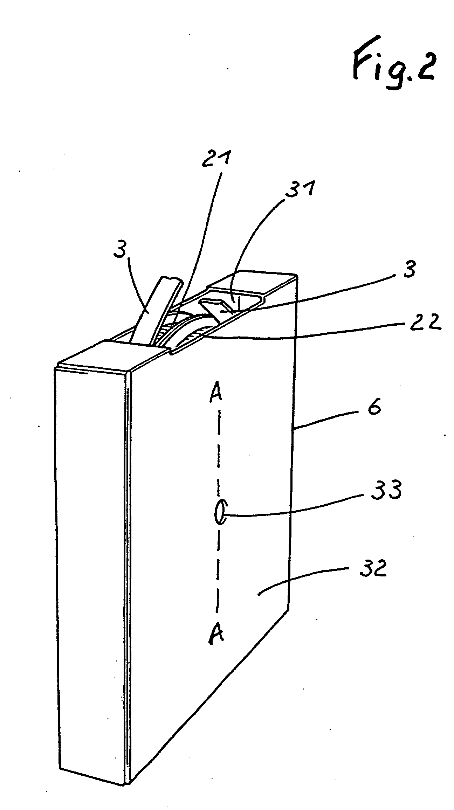

In den Figuren 1 und 2 ist ein austauschbarer Transportbehälter 6 in Form eines flachen Kubus dargestellt, der zwei mit einem Bleigewichtsstrang 3 gegensinnig gewickelte Vorratsspulen 21, 22 enthält, die deckungsgleich aufeinanderliegen und zusammen mit dem Transportbehälter 6 unterhalb eines allgemein mit 5 bezeichneten Ablängmechanismus für den Bleigewichtsstrang auf einem metallenen Standfuß 8 eines metallenen Ständers 9 angeordnet sind.

Die in dem Behälter 6 befindlichen Spulen 21, 22 sind aufrechtstehend auf einer gemeinsamen Achse 17 am Ständer 9 drehbar gelagert. Der Bleigewichtsstrang 3 wird in dem dargestellten Betriebszustand von der Spule 21 abgewickelt und gelangt dabei aus einer Öffnung 31 in der oberen Schmalseite des flachen Transportbehälters 6 in einen von zwei Vorschubwalzen 10, 11 gebildeten Förderwalzenspalt und von dort in eine mit Hilfe eines Handhebels 18, der an dem Ständer 9 verschwenkbar gelagert ist, betätigte Ablängvorrichtung 1. Am unteren Ende des Handhebels befindet sich ein nicht dargestelltes Abkantmesser, mit dem die von dem Bleigewichtsstrang gewünschten Wuchtgewichte abgetrennt werden können, sobald der Bleigewichtsstrang 3 mit Hilfe eines an der Vorschubwalze 10 angebrachten Handrads 16 durch den Förderwalzenspalt hindurchgefördert worden ist.

Im Boden 32 des Transportbehälters 6 befindet sich eine Öffnung 33 für den Durchtritt der die Vorratsspulen 21, 22 aufnehmenden Achse 17. Das aus dem Boden austretende Achsenende ist gegen den Boden 32 mittels Unterlegscheibe 34 und Splint 35 gesichert.

Der in dem Ablängmechanismus 5 stehend angeordnete Transportbehälter 6 bildet also zusammen mit den beiden in ihm befindlichen Vorratsspulen 21, 22 nicht nur eine Transporteinheit, mittels derer die leeren Vorratsspulen wegtransportiert werden können, um anderen Orts gegen volle, also mit einem Bleigewichtsstrang bestückte Vorratsspulen ausgetauscht zu werden, sondern dient in seiner Funktion als Versandeinrichtung als Karton oder Kasten auch als Betriebsmittel, indem er auf die Achse 17 des Ständers 9 der gelieferten Konfiguration nur aufgesteckt zu werden braucht, um dann auf dem Standfuß 8 stehend, gewissermaßen als Bestandteil der Ablängvorrichtung die Anfertigung der gewünschten Wuchtgewichte zu ermöglichen.

Nach Leerung der einen Spule 21 im Transportbehälter 6wird dieser von der Spulenachse 17 abgenommen und um seine Hochachse A-A um 180° gedreht, so daß die volle andere, zur ersten Vorratsspule 22 gegenläufig gewickelte Vorratsspule 21 zur Lieferung des Bleigewichtsstrangs 3 benutzbar ist, ohne daß der Transportbehälter 6 ausgetauscht werden muß.

## Patentansprüche

1. Austauschbarer Transportbehälter (6) umfassend:
einen Bleigewichtsstrang (3) mit Wuchtgewichten für das Auswuchten von Kraftfahrzeugrädern oder -felgen, mit die Wuchtgewichte des Bleigewichtstranges (3) aufnehmenden Vorratsspulen (21, 22) für einen mit einer Längenmeßskala versehenen Mechanismus (5) zum Ablängen des gewünschten Wuchtgewichtes von dem Bleigewichtsstrang (3),
**dadurch gekennzeichnet, daß**
zwei solcher Vorratsspulen gegensinnig gewickelt und deckungsgleich aufeinanderliegend und stehend drehbar auf einer gemeinsamen Achse (17) in dem austauschbaren Transportbehälter (6) angeordnet sind, so daß sie unmittelbar unterhalb des Ablängmechanismus (5), der Bestandteil eines einen Standfuß (8) aufweisenden Ständers ist, stehend drehbar anordbar sind, wobei die Vorratsspulen (21, 22) zusammen mit dem Transportbehälter aus dem Ablängmechanismus (5) entfernbar sind.

2. Austauschbarer Transportbehälter nach Anspruch 1,
**dadurch gekennzeichnet, dass**
der Transportbehälter (6) ein flacher Kubus ist und hinsichtlich Form und Abmessungen an Größe und Form der beiden übereinanderliegenden Spulen (21, 22) angepaßt ist.

3. Austauschbarer Transportbehälter nach Anspruch 1 oder 2, **dadurch gekennzeichnet, daß** der Transportbehälter (6) ein Pappkarton ist.

4. Austauschbarer Transportbehälter nach einem der Ansprüche 1 - 3, **dadurch gekennzeichnet, daß** nach Leerung der einen Vorratsspule (21) im Transportbehälter (6) dieser von der Spulenachse (17) abnehmbar und um seine Hochachse um 180° drehbar ist und die volle andere, zur ersten Vorratsspule (22) gegenläufig gewickelte Vorratsspule (21) zur Lieferung des Bleigewichtsstrangs (3) benutzbar ist.

5. Austauschbarer Transportbehälter nach einem der Ansprüche 1 - 4, **dadurch gekennzeichnet, daß** der Transportbehälter (6) für die Vorratsspulen (21, 22) ein Karton oder Kasten ist, dessen leere Vorratsspulen vom Ablängmechanismus (5) gegen einen ebensolchen Karton oder Kasten mit gefüllten Vorratsspulen austauschbar ist.

6. Austauschbarer Transportbehälter nach einem der Ansprüche 1 - 5, **dadurch gekennzeichnet, daß** der Transportbehälter (6) als Versand- und Betriebsmittel dient, indem er die mit dem Bleigewichtsstrang versehenen oder leeren Spulen beinhaltet, ohne daß diese zwecks Verwendung in dem Ablängmechanismus (5) vorher aus ihm zu entfernen sind.

7. Austauschbarer Transportbehälter nach einem der Ansprüche 1 - 6, **dadurch gekennzeichnet, daß** die eine Schmalseite (30) des flachen Transportbehälters (6) eine Öffnung (31) für den Austritt des Bleigewichtsstrangs (3) der einen oder anderen Vorratsspule (21, 22) aufiveist sowie eine Öffnung (33) in seinem Boden (32) für den Durchtritt der die Vorratsspulen (21, 22) aufnehmenden Achse (17), die im Ständer (9) des Ablängmechanismus angebracht ist.

8. Austauschbarer Transportbehälter nach Anspruch 7, **dadurch gekennzeichnet, daß** das durch die Öffnung (33) hindurchtretende Ende der Achse (17) gegen den Boden (32) des Transportbehälters (6) mittels Unterlegscheibe (34) und Splint (35) gesichert ist.

9. Austauschbarer Transportbehälter nach einem der Ansprüche 1 - 8, **dadurch gekennzeichnet, daß** der Transportbehälter (6) in dem Ablängmechanismus (5) stehend anordbar ist.

## Claims

1. An exchangeable transport container (6), comprising:
a lead weight track (3) having balancing weights for balancing of motorvehicle wheels or motorvehicle rims, and store coils (21, 22) supporting the balancing weights of the lead weight track (3) for a device (5) for cutting off the requested balancing weight from the lead weight track (3),
**characterized in that**
two such store coils are coiled up in opposite directions and arranged in coincidence one over the other as well as rotatably mounted in a standing position on a common axis (17) within the exchangeable transport container (6), such that the store coils are arrangeable rotatably in a standing position directly below the cutting device (5), which is part of a pillar provided with a supporting foot (8), wherein the store coils (21, 22) are removable from the cutting device (5) together with the transport container.

2. Exchangeable transport container according to claim 1,
**characterized in that**
the transport container (6) is a flat cube and is adapted with respect to the shape and dimensions to the size and shape of the coils (21, 22) arranged one over the other.

3. Exchangeable transport container according to claim 1 or 2,
**characterized in that**
the transport container (6) is a card board box.

4. Exchangeable transport container according to any one claims 1 to 3,
**characterized in that**
the transport container (6) is taken from the axis (17) of the coil after the one coil (21) in the transport container (6) has been completely uncoiled, and is turnable about 180° around its vertical axis and wherein the complete other coil (22) being coiled up in opposite direction to the first coil (21) can be used for delivering the lead weight track (3).

5. Exchangeable transport container according to any one claims 1 to 4,
**characterized in that**
the transport container (6) for the store coils (21, 22) is a card board box or housing, the empty store coils thereof of the cutting device (5) being exchangeable by a respective card board box or housing having complete store coils (21, 22).

6. Exchangeable transport container according to any one claims 1 to 5,
**characterized in that**
the transport container (6) is used as a shipping and operating means **in that** it contains the coils provided with the lead weight track or the empty coils, without the need to remove said coils in advance from the transport container for use in the cutting device (5).

7. Exchangeable transport container according to any one claims 1 to 6,
**characterized in that**
the one small face (30) of the flat transport container (6) has an opening (31) for the exit of the lead weight track (3) of the one or the other of the store coils (21, 22), as well as an opening (33) in its bottom (32) for the passing-through of the axis (17), which supports the store coils (21, 22) and which is mounted in the pillar (9) of the cutting device.

8. Exchangeable transport container according to claim 7,
**characterized in that**
the end of the axis (17) passing through the opening (33) is secured by a plain washer (34) and a split-pin (35) against the bottom (32) of the transport container (6).

9. Exchangeable transport container according to any one claims 1 to 8,
**characterized in that**
the transport container (6) is arrangeable in an upright position in the cutting device (5).

## Revendications

1. Conteneur de transport amovible (6) comprenant une bande plombée (3) munie de poids pour équilibrer les roues ou jantes d'un véhicule automobile, des bobines de stockage (21, 22), qui sont destinées à recevoir les poids de la bande plombée (3) pour un mécanisme (15) munie d'une graduation de mesure de longueur pour couper à longueur le poids souhaité de la bande plombée (3), **caractérisé en ce que** deux bobines de ce type sont enroulées en sens inverse et sont superposées de manière coïncidente et de manière verticalement rotative sur un axe (17) commun dans le conteneur de transport amovible (6), de telle sorte qu'elles peuvent être agencées de manière verticalement rotative directement en dessous du mécanisme de coupe à longueur (5), qui est une partie intégrante d'un support muni d'un pied de support (8), les bobines de stockage (21, 22) pouvant être retirées conjointement avec le conteneur de transport hors du mécanisme de coupe à longueur (5).

2. Conteneur de transport amovible selon la revendication 1, **caractérisé en ce que** le conteneur de transport (6) est un cube plat et sa forme et ses dimensions sont adaptées à la dimension et à la forme des deux bobines (21, 22) superposées.

3. Conteneur de transport amovible selon la revendication 1 ou 2, **caractérisé en ce que** le conteneur de transport (6) est une boîte en carton.

4. Conteneur de transport amovible selon une des revendications 1 à 3, **caractérisé en ce que**, après vidage de l'une des bobines de stockage (21) dans le conteneur de transport (6), celui-ci peut être retiré de l'axe des bobines (17) et peut tourner de 180° autour de son axe vertical et l'autre bobine de stockage (22) pleine, enroulée dans le sens inverse de la première bobine de stockage (21), peut être utilisée pour fournir la bande plombée (3).

5. Conteneur de transport amovible selon une des revendications 1 à 4, **caractérisé en ce que** le conteneur de transport (6) pour les bobines de stockage (21, 22) est un carton ou un caisson qui, lorsque les bobines de stockage du mécanisme de coupe à longueur (5) sont vides, peut être remplacé par un même carton ou caisson contenant des bobines de stockage pleines.

6. Conteneur de transport amovible selon une des revendications 1 à 5, **caractérisé en ce que** le conteneur de transport (6) est utilisé comme moyen d'expédition et d'exploitation, dans la mesure où il contient les bobines munies de la bande plombée ou vides, sans qu'il soit nécessaire de retirer celles-ci dudit conteneur en vue de les utiliser dans le mécanisme de coupe à longueur (5).

7. Conteneur de transport amovible selon une des revendications 1 à 6, **caractérisé en ce que** l'un des côtés étroits (30) du conteneur de transport (6) plat comporte une ouverture (31) par laquelle sort la bande plombée (3) de l'une ou l'autre bobine de stockage (21, 22), ainsi qu'une ouverture (33) dans son fond (32) pour le passage de l'axe (17), sur lequel sont logées les bobines de stockage (21, 22) et qui est agencé dans le support (9) du mécanisme de coupe à longueur (5).

8. Conteneur de transport amovible selon la revendication 7, **caractérisé en ce que** l'extrémité de l'axe (17) passant à travers l'ouverture (33) est bloquée contre le fond (32) du conteneur de transport (6) au moyen d'une rondelle (34) et d'une goupille fendue (35).

9. Conteneur de transport amovible selon une des revendications 1 à 8, **caractérisé en ce que** le conteneur de transport (6) est agencé verticalement dans le mécanisme de coupe à longueur (5).
